# EUROPEAN PATENT SPECIFICATION

(11) **EP 0 435 810 B1**
(45) Date of publication and mention of the grant of the patent: **10.11.1993**
(21) Application number: 90500125.1
(22) Date of filing: 19.12.1990
(51) Int. Cl.: B65G 15/14, B65G 17/46, B08B 1/02

(54) **A conveyor device for parts through machines for the washing thereof**
Fördereinrichtung für Einzelteile in Waschanlagen
Dispositif de transport pour des pièces dans des machines de lavage

(30) Priority: 29.12.1989 ES 8904428
(43) Date of publication of application: 03.07.1991
(73) Proprietor: INGENIERIA AGULLO, S.A., E-08006 Barcelona (ES)
(72) Inventor: Agullo Negui, Miguel, E-08006 Barcelona (ES)
(74) Representative: Ferregüela Colon, Eduardo

(56) References cited:
- US-A- 3 454 142
- US-A- 3 550 754
- US-A- 3 779 367
- US-A- 4 639 968

## Description

### Technical field.-

The present invention relates to a conveyor device for parts, particularly applicable to the conveyance of lightweight machined parts through washing machines, in which said parts are successively subjected to operations of immersion in washing liquid vats and/or solid material blasting and hot air jet drying.

The conveyor device comprises a conveyor belt for said parts, provided with a continuous feed movement, on both sides of which there are disposed respective endless chains of which the paths lie in a horizontal plane, the chains being of a conventional articulated link type at a slightly higher level, which rotate synchronously around respective pair of sprockets associated with a gear and transmission bar unit, driven by a motor means providing the sprockets with an intermittent movement, there being opposedly disposed at least one first pair of front retaining stop members, attached to respective links of said chains and adapted to hold a part by the front leading portion of the part, when said part abuts said pair of retaining stop members, just after the links to which the front retaining stop members are attached have passed beyond the first pair of sprockets, and at least one second pair of rear retaining stop members, adapted in turn to retain said part by the trailing end of the part, when the links to which the rear retaining stop members are attached have just passed beyond the first pair of sprockets.

### Prior art.-

Machines for washing machined parts are well known. Said parts are conveyed through the interior of such machines by various systems, the most used among which are those formed by two pairs of step by step feed bars.

All these systems provide for the intermittent feed of the parts and the halting thereof in front of washing liquid jet stations, and hot air jet drying stations.

When dealing with relatively lightweight parts, unless there is an adequate retaining system for them in front of each washing and/or drying station, the action of the jets may even dislodge the part, which may become misplaced in the feed system and make the washing inoperative, since the jets do not coincide with the locations of the part to be washed.

The USA Patent No. 3,454,142 describes a positive straigt line article conveying mechanism suitable for conveying a plurality of bottles, including an article conveyor, article controlling means associated with said conveyor on opposite sides thereof and contactable with an article being conveyed on the conveyor for controlling the alignment and disposition thereof, means for driving said conveyor and said article controlling means in synchronism.

This mechanism provides a good lateral conveying control of articles and is suitable to certain applications, but it presents some disadvantages in the case of conveyed articles which are to be controlled to avoid vertical movements of them, for example in the case of these articles should be subjected to the action of washing machines .

### Brief description of the invention.-

Starting from the mechanism described in USA Patent No. 3,454,142 as it can be seen in the preamble of the independent claim of the present invention, the device in question allows all the aforesaid drawbacks to be overcome and thereby to achieve safe, reliable conveyance of lightweight parts along the inside of washing machines, without undesirable movements thereof, causing deficient washing.

The device of the present invention is characterised in that said first and second pairs of retaining stop members are adapted to hold a part by the upper portion of the part, in such a way that the part is held by both pairs of retaining stop members on the conveyor belt, during the whole of its passage through the inside of the washing machine, after which the part remains deposited on the conveyor belt, but released from the grip of the retaining stop members from the time when the links to which said retaining stop members are attached start to move successively in front of said second pair of sprockets.

According to an optional feature of the invention, above the conveyor belt and below the trajectory of the lower surface of the retaining stop members, there are disposed two lateral longitudinal guide members, adapted to prevent undesired lateral movements of the parts before they are retained by the retaining stop members.

According to a further optional feature of the invention, each of the chain sprockets is associated with a gearbox, the gearboxes being coupled together by corresponding shafts and transmission bars, for intermittent synchronised movement thereof.

### Brief description of the drawings

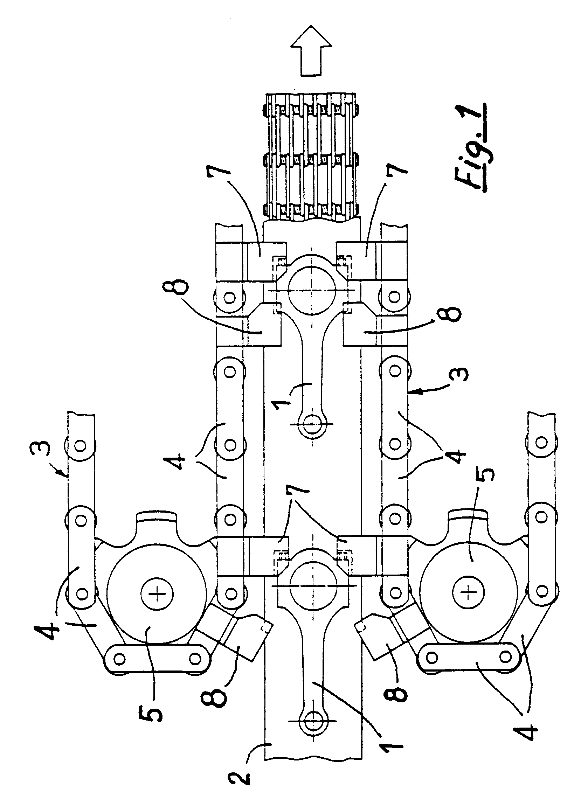

Figure 1 is a schematic plan view of the forward portion of the chains and of the conveyor belt;
Figure 2 is a front elevation view of the overall device of the invention; and
Figure 3 is a perspective view of the ensemble of Figure 2.

### Best method of embodying the invention

In the drawings it may be seen that the conveyor device of the invention, applicable to the conveyance of lightweight parts 1 through parts washing machines, comprises a conveyor belt 2 on both sides of which at a slightly higher level there are disposed respective endless chains 3, of conventional type having mutually articulated links 4. Said chains 3 rotate around respective pairs of sprockets 5, associated to a gear and transmission bar unit driven by drive means 6, providing them with an intermittent movement.

On the chains 3 there are disposed opposedly a plurality of pairs of front retaining stop members 7, fixedly attached to certain links 4 of said chains 3, with each of said pairs being adapted to retain a part 1 by the front upper leading portion thereof when said part 1 abuts said pair of stop members 7, after the links 4 to which the stop members 7 are attached have just moved beyond the first pair of sprockets 5.

In the same way, a like number of pairs of rear retaining stop members 8 are provided, with each being adapted to retain in turn a part 1 by the rear portion and upper trailing edge thereof, when the links 4 to which the retaining stop members 8 are attached have just passed beyond the first pair of sprockets 5.

Each part 1 is thus retained by a pair of front retaining stop members 7 and by a further pair of rear retaining stop members 8 on the conveyor belt 2, throughout the whole of its passage through the washing machine.

At the end of such passage the part 1 remains on the conveyor belt 2, but released from retention by the retaining stop members 7 and 8, from the time when the links 4 to which said stops 7 and 8 start to pass succes sively by the second pair of sprockets 5.

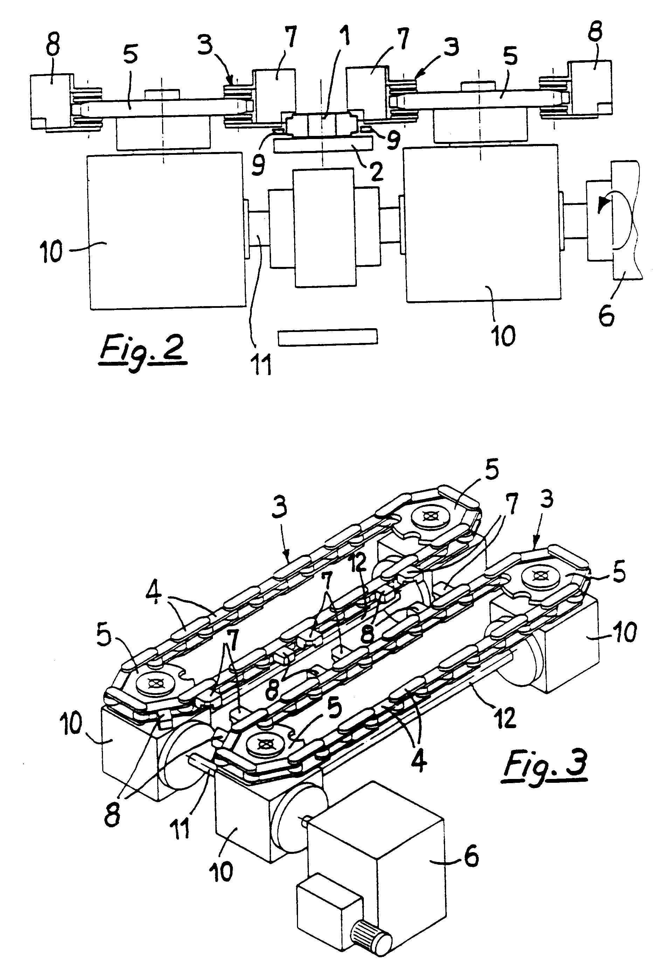

Above the conveyor belt 2 and below the path of the lower surface of the retaining stop members 7 and 8 (Figure 2) there are disposed two longitudinal lateral guides 9, adapted to prevent undesired lateral movements of the parts 1, before these are retained by the front retaining stop members 7.

Each of the sprockets 5 of the chains 3 is associated with a gearbox 10, the four gearboxes 10 being coupled together by corresponding shafts 11 and transmission bars 12, to obtain synchronised intermittent movement thereof.

Having sufficiently described the nature of the invention, as well as the way of reducing it to practice, it is declared that everything which does not alter, change or modify the scope of the claims, may be subject to variations of detail.

## Claims

1. A conveyor device for parts through machines for the washing thereof, particularly applicable to the conveyance of lightweight machined parts (1) through washing machines, in which said parts are successively subjected to operations of immersion in stirred washing liquid vats, washing liquid jets and/or solid material blasting and drying by hot air jets, the conveyor device comprising a conveyor belt (2) for said parts, on both sides of which there are disposed respective endless chains (3) of which the paths lie in a horizontal plane, the chains being of a conventional articulated link type at a slightly higher level, which rotate synchronously around respective pairs of sprockets (5) associated with a gear and transmission bar unit, driven by a motor means (6) providing the sprockets with an intermittent movement, there being opposedly disposed at least one first pair of front retaining stop members (7), attached to respective links (4) of said chains and adapted to hold a part by the front leading portion of the part, when said part abuts said pair of retaining stop members, just after the links to which the front retaining stop members are attached have passed beyond the first pair of sprockets, and at least one second pair of rear retaining stop members (8), adapted in turn to retain said part by the trailing end of the part, when the links to which the rear retaining stop members are attached have just passed beyond the first pair of sprockets, characterised in that the conveyor belt (2) is provided with a continuous feed movement, and in that said first and second pairs of retaining stop members are adapted to hold a part by the upper portion of the part, and in that the stop members (8) are fixedly attached to the links, in such a way that the part is held by both pairs of retaining stop members on the conveyor belt, during the whole of its passage through the inside of the washing machine, after which the part remains deposited on the conveyor belt, but released from the grip of the retaining stop members from the time when the links to which said retaining stop members are attached start to move successively in front of said second pair of sprockets.

2. The device of claim 1, characterised in that above the conveyor belt and below the path of the lower surface of the front and rear retaining stop members there are disposed two longitudinal lateral guides (9), adapted to prevent undesired lateral movements of the parts, before these are retained by the retaining stop members.

3. The device of claim 1, characterised in that each of the sprockets of the chains is associated with a gearbox (10), the four gearboxes being coupled together by corresponding shafts (11) and transmission bars (12) for synchronised intermittent movement thereof.

## Patentansprüche

1. Transportvorrichtung für die Beförderung von Teilen durch Maschinen hindurch zur Reinigung derselben, insbesondere verwendbar für den Transport von leichten bearbeiteten Teilen (1) durch Waschmaschinen hindurch, in denen besagte Teile nacheinander folgenden Arbeitsschritten unterzogen werden: Eintauchen in Rührwaschbottiche, Waschen mittels Flüssigkeitsstrahlen und/oder Einblasen von Feststoffen und Trocknen mittels Warmluftstrahlen, wobei die Transportvorrichtung ein Transportband (2) für besagte Teile aufweist, auf deren beiden Seiten entsprechende Endlosketten (3) angeordnet sind, deren Laufwege in einer horizontalen Ebene liegen, wobei die Ketten herkömmliche Gelenkgliederketten mit einem geringfügig höheren Niveau sind, die sich synchron um entsprechende Kettenradpaare (5) drehen, die mit einer Getriebe- und Transmissionswelleneinheit verbunden sind, die von einem Motor (6) angetrieben wird und dabei den Kettenrädern eine intermittierende Bewegung ermöglicht, wobei folgendes einander gegenüber angeordnet ist: mindestens ein erstes Paar vorderer Festhalte-Anschlagteile (7), die an entsprechenden Kettengliedern (4) besagter Ketten angebracht und geeignet sind, ein Teil am vorderen vorangehenden Abschnitt des Teils festzuhalten, wenn besagtes Teil an besagtes Paar der Festhalte-Anschlagteile anstößt, unmittelbar nachdem die Kettenglieder, an denen die vorderen Festhalte-Anschlagteile angebracht sind, sich über das erste Kettenradpaar hinausbewegt haben, und mindestens ein zweites Paar hinterer Festhalte-Anschlagteile (8), die ihrerseits geeignet sind, besagtes Teil am hinteren Ende des Teils festzuhalten, wenn die Kettenglieder, an denen die hinteren Festhalte-Anschlagteile angebracht sind, sich gerade über das erste Kettenradpaar hinausbewegt haben, dadurch gekennzeichnet, daß das Transportband (2) mit einer kontinuierlichen Förderbewegung bereitgestellt wird und daß besagtes erstes und zweites Paar der Festhalte-Anschlagteile geeignet sind, ein Teil am oberen Abschnitt des Teils zu halten, und daß die Anschlagteile (8) an den Kettengliedern auf eine Weise fest angebracht sind, daß das Teil von beiden Paaren der Festhalte-Anschlagteile auf dem Transportband festgehalten wird, und zwar während ihres gesamten Durchlaufs durch das Innere der Waschmaschine, wonach das Teil auf dem Transportband verbleibt, jedoch aus dem Festhaltegriff der Festhalte-Anschlagteile gelöst ist, und zwar von dem Zeitpunkt an, wo die Kettenglieder, an denen besagte Festhalte-Anschlagteile angebracht sind, anfangen, sich nacheinander vor besagtem zweiten Kettenradpaar zu bewegen.

2. Vorrichtung nach Anspruch 1, dadurch gekennzeichnet, daß über dem Transportband und unter dem Laufwerk der unteren Oberfläche der vorderen und hinteren Festhalte-Anschlagteile zwei seitliche Längsführungen (9) angeordnet sind, die geeignet sind, unerwünschte Seitenbewegungen der Teile zu verhindern, bevor diese von den Festhalte-Anschlagteilen festgehalten werden.

3. Vorrichtung nach Anspruch 1, dadurch gekennzeichnet, daß jedes der Kettenräder mit einem Getriebe (10) verbunden ist, wobei die vier Getriebe über entsprechende Wellen (11) und Transmissionswellen (12) zwecks synchronisierter intermittierender Bewegung derselben miteinander gekoppelt sind.

## Revendications

1. Dispositif de transport de pièces à l'intérieur des machines pour le lavage desdites pièces, applicable en particulier au transport de pièces (1) légères à l'intérieur des machines de lavage, dans lesquelles lesdites pièces sont soumises succesivement à des opérations d'immersion dans des cuves de liquide de lavage sous agitation, jets de liquide de lavage et/ou écoulement d'éléments solides et séchage par jets d'air chaud, le dispositif de transport comprenant une bande transporteuse (2) pour lesdites pièces, aux deux côtés de laquelle sont disposées respectivement des chaînes sans fin (3), dont les trajectoires s'étendent sur un plan horizontal, les chaînes étant du type conventionnel de maillons articulés à un niveau légèrement plus haut, qui tournent de façon synchronisée autour des respectives paires de roues dentées (5) associées à un ensemble de barre de transmission et d'engrenage, actionné par un organe moteur (6) proportionnant auxdites roues dentées un mouvement d'avancement intermittent, se trouvant disposée en face au moins une première paire de butoirs antérieurs (7), solidement fixés aux maillons respectifs (4) desdites chaînes et adaptés de façon a retenir une pièce par le côté frontal antérieur et supérieur de ladite pièce, lorsque ladite pièce bute contre ladite paire de butoirs, lorsque les maillons auxquels les butoirs antérieurs sont fixés ont dépassé la première paire de roues dentées, et au moins une seconde paire de butoirs postérieurs (8), adaptés eux-aussi de façon à retenir ladite pièce par l'extrémité postérieure de ladite pièce lorsque les maillons auxquels les butoirs postérieurs sont fixés ont dépassé la première paire de roues dentées, caractérisé en ce que la bande transporteuse (2) est pourvue d'un mouvement d'avancement continu et en ce que lesdites première et deuxième paires de butoirs sont adaptées pour retenir une pièce par le côté supérieur de ladite pièce, et en ce que les butoirs (8) sont fixés solidement aux maillons, de telle façon que la pièce est retenue par les deux paires de butoirs sur la bande transporteuse pendant toute la durée de son trajet à l'intérieur de la machine de lavage, ensuite la pièce reste déposée sur la bande transporteuse, mais elle se libère de la prise des butoirs à partir du moment où les maillons auxquels les butoirs sont fixés commencent à avancer successivement en face de la deuxième paire de roues dentées.

2. Dispositif selon la revendication 1, caractérisé par le fait qu'au-dessus de la bande transporteuse et au-dessous de la trajectoire de la face inférieure des butoirs antérieurs et postérieurs, sont disposés deux guides (9) latéraux longitudinaux, adaptés pour éviter les déplacements latéraux non désirables des pièces, avant que celles-ci soient retenues par les butoirs.

3. Dispositif selon la revendication 1, caractérisé par le fait que chacune des roues dentées des chaînes est associée à une boîte à engrenages (10), les quatre boîtes à engrenages étant accouplées entre elles par des arbres (11) et des barres de transmission (12) correspondants, pour permettre leur mouvement intermittent synchronisé.
